# DEMANDE DE BREVET EUROPEEN

(11) **EP 2 418 146 A1**
(43) Date de publication de la demande: **15.02.2012**
(21) Numéro de dépôt: 11176392.6
(22) Date de dépôt: 03.08.2011
(51) Int. Cl.: B64C 13/12, B64C 27/02, B64C 31/028

(54) **Aéronef motorise léger a équilibrage amélioré**

(30) Priorité: 12.08.2010 FR 1056580
(71) Demandeur: MG Composites, 26300 Besayes (FR)
(72) Inventeur: Guillermin, Michel, 26300 BESAYES (FR); Filograsso, Jean-Pierre, 69007 LYON (FR)
(74) Mandataire: Guérin, Jean-Philippe

(57) **Abrégé**

L'invention concerne un aéronef motorisé léger (1), comportant:
-une dérive (304) ;
-un poste de pilotage apte à recevoir des premier et deuxième sièges disposés côte à côte;
-un palonnier de commande (201) de la dérive (304), le palonnier comportant des première à quatrième pédales (281, 282, 283, 284), les première et troisième pédales induisant une commande sur la dérive opposée à la commande des deuxième et quatrième pédales, les première et deuxième pédales étant en vis-à-vis du premier siège et les troisième et quatrième pédales étant en vis-à-vis du deuxième siège.

Le poste de pilotage est apte à recevoir un unique siège disposé au niveau du plan médian de l'aéronef en remplacement des premier et deuxième sièges et disposé en vis-à-vis des deuxième et troisième pédales ;

L'aéronef comporte un dispositif permettant d'inverser les commandes appliquées sur la dérive (304) par les deuxième et troisième pédales.

## Description

L'invention concerne les aéronefs motorisés légers, et en particulier la configuration du poste de pilotage de tels aéronefs.

On désignera par la suite par aéronef motorisé léger tout aéronef motorisé dont la masse à vide est inférieure à 600 kilos. Différentes législations ont défini une catégorie d'aéronefs motorisés pouvant être pilotés avec des conditions de certification et de maintenance moins contraignantes.

La législation française définit notamment une catégorie d'aéronefs sous le nom d'ultra léger motorisé ou ULM. De tels aéronefs doivent comporter une masse totale au décollage inférieure à 450 kilos et une motorisation d'une puissance continue inférieure à 60 kW. L'utilisation de tels aéronefs est moins contraignante que celles des aéronefs classés comme avion ou hélicoptère, la licence de vol étant plus simple à obtenir, un nombre d'heures de vol minimal n'étant pas requis et la tenue d'un carnet de vol n'étant pas obligatoire. De plus, de tels aéronefs peuvent aisément se poser en dehors d'aérodromes aménagés. Du fait du coût plus réduit de cette catégorie d'aéronefs, leurs utilisateurs en sont fréquemment propriétaires et le coût de l'heure de vol est réduit.

Les principaux types d'ULM diffusés sont les suivants :
- le pendulaire : il s'agit d'un aéronef sustenté par une voilure souple sous laquelle est accroché un chariot motorisé entraînant une hélice;
- le mutiaxe : il s'agit d'un aéronef sustenté par une voilure fixe sous laquelle est accroché un chariot motorisé entraînant une hélice;
- l'autogire : il s'agit d'un aéronef sustenté par un rotor dans le plan horizontal et propulsé par une hélice disposée dans le plan vertical. Lorsque l'autogire est en vol, le rotor est entraîné par le vent relatif qui vient de l'avant de l'aéronef et assure alors la sustentation. Au décollage, le rotor est transitoirement motorisé simultanément avec une poussée de l'hélice jusqu'à ce que la vitesse de l'aéronef soit suffisante pour assurer une sustentation par entraînement du rotor par le vent relatif.

Ces appareils comprennent généralement un palonnier de commande d'une dérive disposée à l'arrière afin de contrôler l'angle de lacet de l'appareil. Ces appareils comprennent également une commande de puissance du moteur entraînant l'hélice et une commande du tangage de l'appareil.

Du fait des contraintes de poids, les aéronefs motorisés légers ont initialement été développés en version monoplace. Afin de rendre le vol plus agréable ou de permettre à un instructeur et un élève de prendre place dans le même aéronef, de nombreux modèles d'appareils biplaces ont été développés.

Dans un certain nombre d'appareils biplaces, les sièges sont disposés côte à côte de part et d'autre du plan médian de l'appareil et le palonnier de commande de la dérive comprend des pédales dédoublées afin de permettre aux deux passagers de prendre le contrôle de l'aéronef. En présence de deux utilisateurs, leurs masses respectives sont disposées de part et d'autre du plan médian de l'aéronef, ce qui participe à son équilibre de vol.

Un tel appareil présente cependant des inconvénients. En effet, en présence d'un seul passager, la masse n'est pas équitablement répartie de part et d'autre du plan médian ce qui crée un déséquilibre de l'appareil. Le pilote doit alors compenser ce déséquilibre durant le vol par un contrôle approprié des commandes de vol, ce qui rend le pilotage moins agréable et plus délicat. Ce déséquilibre est d'autant plus important que le pilote est lourd et que l'appareil est léger. Ce déséquilibre est donc particulièrement sensible pour des appareils motorisés légers, en particulier lorsque leur masse à vide est inférieure à 300 kilos.

Un appareil de ce type est notamment décrit dans le document US 3 994 453. Pour permettre au pilote de piloter en position médiane lorsqu'il est seul, ce document propose de rapporter un complément d'assise, permettant au pilote de s'asseoir à cheval sur les sièges latéraux. Le pilote utilise alors une pédale de chaque palonnier, ce qui est peut pratique à mettre en oeuvre.

Par conséquent, un certain nombre d'aéronefs motorisés légers renoncent à un dédoublement des commandes de palonnier et comportent deux sièges placés l'un derrière l'autre dans le plan médian. Un tel aéronef reste ainsi équilibré par rapport au plan médian aussi bien en présence d'un seul que de deux passagers.

Cependant, un tel appareil s'avère peu convivial en présence de deux passagers, ceux-ci n'étant pas disposés au même niveau axial dans l'appareil et pouvant ainsi moins facilement partager leurs impressions de vol. Par ailleurs, un tel appareil présente un encombrement axial accru.

L'invention vise à résoudre un ou plusieurs de ces inconvénients. L'invention porte ainsi sur un aéronef motorisé léger, comportant:
- une dérive pivotante ;
- un poste de pilotage apte à recevoir des premier et deuxième sièges disposés côte à côte de part et d'autre du plan médian de l'aéronef ;
- un palonnier de commande du pivotement de la dérive, le palonnier comportant des première, deuxième, troisième et quatrième pédales, les première et troisième pédales induisant une commande sur la dérive opposée à la commande des deuxième et quatrième pédales, les première et deuxième pédales étant en vis-à-vis du premier siège et les troisième et quatrième pédales étant en vis-à-vis du deuxième siège.

Le poste de pilotage est apte à recevoir un unique siège disposé au niveau du plan médian de l'aéronef en remplacement des premier et deuxième sièges et disposé en vis-à-vis des deuxième et troisième pédales ;
- l'aéronef comporte un dispositif permettant d'inverser sélectivement les commandes appliquées sur la dérive par les deuxième et troisième pédales.

Selon une variante, l'aéronef comprend une roue montée pivotante autour d'un axe vertical au niveau d'une extrémité avant de l'aéronef, le palonnier de commande entraînant la roue en pivotement autour de cet axe vertical, les première et troisième pédales induisant une commande de pivotement de la roue opposée à la commande des deuxième et quatrième pédales, l'aéronef comportant également un dispositif permettant d'inverser les commandes de pivotement appliquées sur la roue par les deuxième et troisième pédales.

Selon encore une variante, le palonnier comprend des premier et deuxième arbres montés pivotants transversalement dans le poste de pilotage, les première et troisième pédales étant fixées radialement en saillie sur le premier arbre et les deuxième et quatrième pédales étant fixées radialement en saillie sur le deuxième arbre, le palonnier comportant une barre de direction montée pivotante autour d'un axe vertical et entraînant le pivotement de la dérive, la barre de direction comportant des première et deuxième branches s'étendant latéralement de part et d'autre de l'axe vertical, les premier et deuxième arbres pouvant chacun être accouplés sélectivement à chacune des branches latérales de la barre de direction.

Selon une autre variante, le dispositif d'inversion des commandes comprend :
- deux rotules fixées sur la première branche latérale de la barre de direction ;
- deux rotules fixées sur la deuxième branche latérale de la barre de direction;
- deux rotules solidaires du premier arbre ;
- deux rotules solidaires du deuxième arbre ;
- des biellettes présentant des extrémités pouvant être emboîtées de façon démontable sur lesdites rotules, de façon à accoupler sélectivement le premier arbre à la première ou à la deuxième branche latérale de la barre de direction, et de façon à accoupler sélectivement le deuxième arbre à la première ou à la deuxième branche latérale de la barre de direction.

Selon encore une autre variante, l'aéronef comprend un premier câble fixé sur la première branche latérale de la barre de direction, un deuxième câble fixé sur la deuxième branche latérale de la barre de direction, les câbles entraînant la dérive en pivotement lorsqu'ils sont entraînés par la barre de direction.

Selon une variante, l'aéronef comprend un cockpit délimitant le poste de pilotage, un logement étant ménagé dans le cockpit à l'arrière du siège en position centrale de façon à loger un siège additionnel.

Selon encore une variante, l'aéronef comprend une commande de l'angle de tangage de cet aéronef, la commande de l'angle de tangage comportant un arbre s'étendant transversalement à l'avant des emplacements des premier et deuxième sièges et comportant au moins un manche, l'arbre et le manche étant configurés pour permettre la fixation du manche à l'arbre sélectivement en vis-à-vis des emplacements du premier siège, du deuxième siège ou du siège unique.

Selon une autre variante, l'aéronef comprend un moteur à combustion interne et une commande d'accélérateur du moteur à combustion interne, la commande d'accélérateur comportant un arbre s'étendant transversalement dans le poste de pilotage et comportant au moins un manche, l'arbre et le manche étant configurés pour la fixation du manche à l'arbre de façon à rendre sélectivement le manche accessible latéralement depuis le premier siège, depuis le deuxième siège ou depuis le siège unique.

Selon encore une autre variante, l'unique siège en position centrale est disposé à cheval sur les emplacements des premier et deuxième sièges.

Selon une variante, cet aéronef est un autogire.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue de côté schématique d'un autogire selon un mode de réalisation de l'invention ;
- la figure 2 est une vue de dessus du poste de pilotage au niveau de la zone de fixation des sièges ;
- la figure 3 est une vue schématique de côté des mécanismes de commande d'accélérateur et de commande d'inclinaison du rotor au niveau de la zone de fixation des sièges ;
- les figures 4 et 5 sont des vues de dessus illustrant un exemple de disposition des sièges et des commandes respectivement en configuration biplace et en configuration monoplace ;
- la figure 6 est une représentation schématique de dessus d'une structure de palonnier selon l'invention ;
- la figure 7 est une vue de face du palonnier de la figure 6 ;
- les figures 8 et 9 illustrent l'action du palonnier dans la configuration biplace ;
- les figures 10 et 11 illustrent l'action du palonnier dans la configuration monoplace ;
- la figure 12 est une vue schématique de côté d'un cockpit adapté pour loger un siège démonté en version monoplace ;

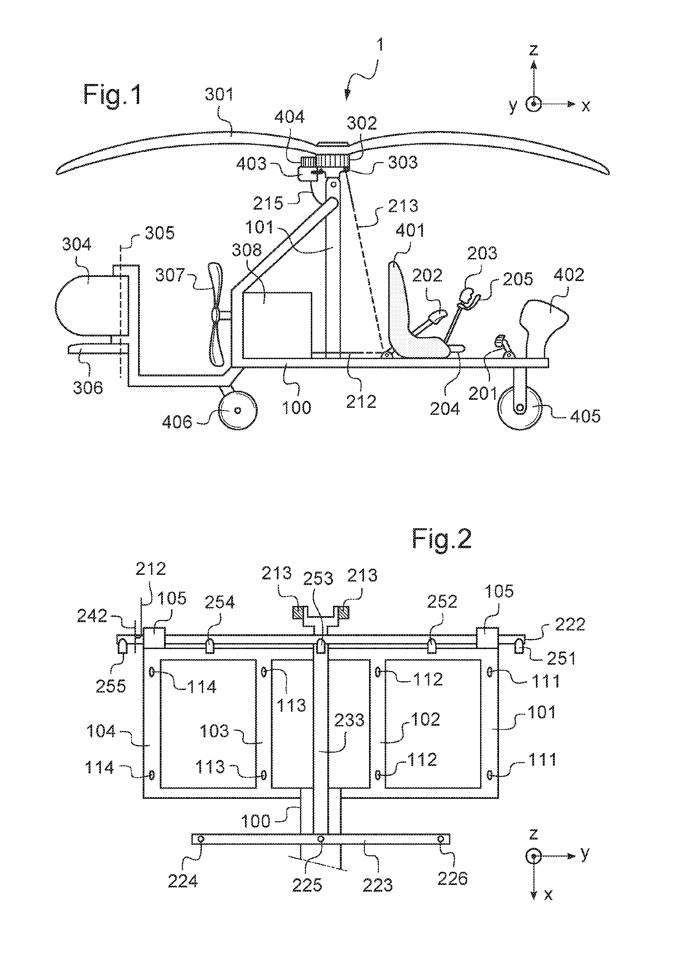

La figure 1 est une vue de côté schématique illustrant un aéronef motorisé léger selon un mode de réalisation de l'invention. Cet aéronef est en l'occurrence un autogire 1. L'autogire 1 comprend un châssis 100 supportant différents composants. Un moteur à combustion interne 308 est ainsi fixé sur le châssis 100. Ce moteur à combustion interne 308 entraîne une hélice 307 en rotation. L'hélice 307 tourne dans un plan transversal (Y,Z) pour assurer la poussée axiale de l'autogire 1.

Un empannage est fixé à l'extrémité arrière du châssis 100. L'empannage comprend un empannage horizontal fixe 306 et une dérive verticale 304. Pour permettre à l'autogire 1 de virer (angle de lacet autour de l'axe Z), la dérive 304 est montée pivotante autour d'un axe vertical 305. Le pivotement de la dérive 304 est commandé par un palonnier 201 disposé dans la partie avant de l'aéronef. La dérive 304 et l'empannage horizontal 306 sont de préférence disposés axialement et verticalement dans l'alignement de l'hélice 307.

L'autogire 1 repose sur un train roulant arrière comprenant deux roues latérales 406 et un train roulant avant comprenant une roue médiane 405. Les trains roulants avant et arrière permettent à l'appareil de procéder au décollage et à l'atterrissage. Le train roulant avant est monté pivotant autour d'un axe vertical pour permettre de diriger l'autogire 1 lorsque celui-ci est au sol. Le pivotement du train avant est également commandé par le palonnier 201.

L'autogire 1 comprend un mât 101 sensiblement vertical fixé sur le châssis 100. Un rotor 301 est monté au niveau de l'extrémité supérieure du mât 101. Le rotor 301 comprend plusieurs pales de façon connue en soi, dont la rotation est entraînée par le vent relatif et assure la sustentation de l'autogire 1. Le rotor 301 est monté pivotant par rapport aux mât 101 autour d'un axe transversal (Y) afin de contrôler l'angle de tangage de l'autogire 1. Le rotor 301 est également monté pivotant par rapport au mât 101 autour d'un axe longitudinal (X) afin de contrôler partiellement l'angle de lacet de l'autogire 1. Le rotor 301 est monté à rotation autour d'un axe correspondant sensiblement à l'axe du mât 101, sur une platine 303. La platine 303 est reliée selon une liaison rotule non illustrée à l'extrémité supérieure du mât 101. Le rotor 301 comprend une denture 302 solidaire des pales. Un lanceur 403 est fixé sur la platine 303 et présente une denture 404 s'engrenant sur la denture 302. De façon connue en soi, le lanceur 403 peut être à entraînement hydraulique, électrique ou mécanique. Le mât 101 est légèrement incliné vers l'arrière pour définir une position neutre du rotor 301 garantissant le maintien de l'autogire 1 à une même altitude.

L'autogire 1 illustré comprend un poste de pilotage, qui peut être délimité par un cockpit non illustré pour des raisons de lisibilité. Au moins un siège 401 est installé dans le poste de pilotage. Le siège 401 est disposé en vis-à-vis du palonnier 201. Le siège 401 est disposé à l'avant du mât 101, afin que le poids de son passager équilibre le poids du moteur 308 par rapport au mât 101. Une console 402 regroupant des instruments de vol est disposée au niveau de l'extrémité avant de l'autogire 1, à l'avant du palonnier 201.

Outre le palonnier 201, le passager installé dans le siège 401 dispose d'un certain nombre de commandes de vol. Un levier d'accélérateur 202 permet de contrôler l'accélérateur du moteur 308 par l'intermédiaire d'un câble 212. Un levier 203 permet de contrôler l'inclinaison du rotor 301 autour des axes X et Y par l'intermédiaire de tringles 213. Une manette 205 est montée sur le levier 203 et permet d'activer sélectivement le lanceur 403 par l'intermédiaire d'un câble 215. Une manette 204 permet d'actionner un frein de parking destiné à immobiliser la roue 405.

De façon simplifiée, on peut définir le contrôle de l'autogire 1 de la façon suivante :
En vol en montée, le rotor 301 est basculé vers l'arrière en exerçant une traction sur le levier 203. Le phénomène de précession gyroscopique abaisse l'arrière du rotor et augmente ainsi son angle d'incidence. La montée peut également être contrôlée au moyen du levier d'accélérateur 202 pour augmenter la vitesse de rotation du rotor 301 à incidence constante.
En vol en descente, le rotor 301 est basculé vers l'avant en exerçant une poussée sur le levier 203. Le même phénomène de précession gyroscopique monte l'arrière du rotor, son angle d'incidence baisse tout en restant positif. La descente peut également être contrôlée au moyen du levier d'accélérateur 202 pour réduire la vitesse de rotation du rotor 301 à incidence constante.
En descente sans moteur, par exemple lorsque le moteur 308 est défaillant, on incline fortement le rotor 301 vers l'avant par une poussée sur le levier 203. La vitesse acquise par l'appareil en descente maintient la portance générée par le rotor 301.
Pour réaliser un virage, on actionne la dérive 304 dans le sens voulu au moyen du palonnier 201. Le rotor 301 est également incliné autour de l'axe longitudinal au moyen du levier 203.

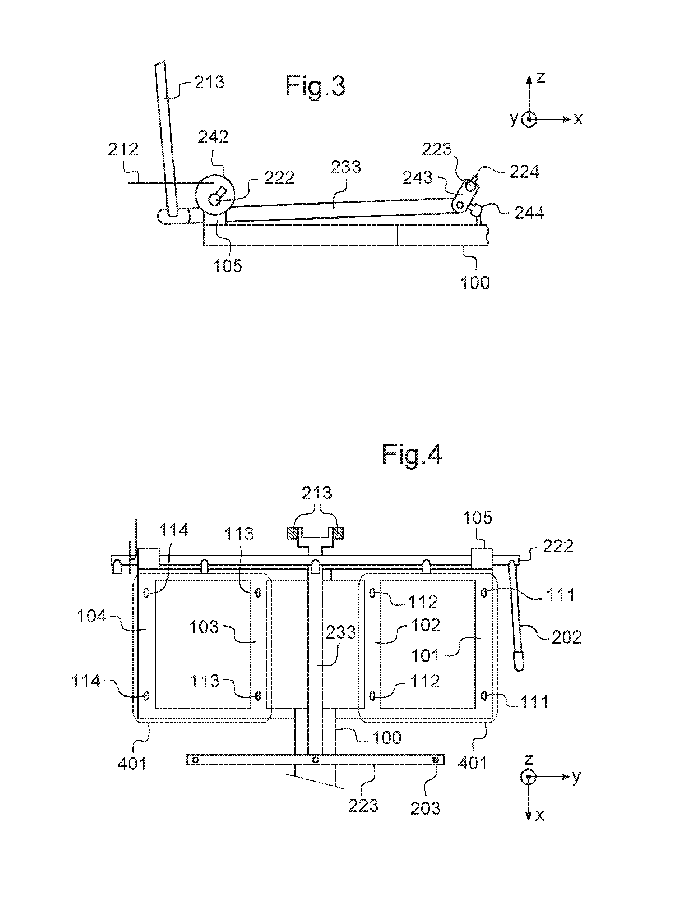

La figure 2 est une vue de dessus schématique du poste de pilotage de l'autogire 1 au niveau de la zone de fixation des sièges 401. La figure 3 est une vue de côté de cette même zone. Le châssis 100 présente des longerons longitudinaux 101, 102, 103 et 104 destinés à supporter les sièges 401. Des orifices de fixation 111,112, 113 et 114 sont définies aux extrémités axiales respectives des longerons 101, 102, 103 et 104. Ces orifices 111,112, 113 et 114 sont destinés à recevoir des ergots disposés sous les sièges 401 pour assurer leur fixation de façon amovible.

Un arbre 222 est monté pivotant autour d'un axe Y à l'arrière des longerons 101 à 104. L'arbre 222 est monté pivotant dans des portées 105. L'arbre 222 comporte des plots de fixation 251, 252, 253, 254 et 255 s'étendant radialement. Les longerons 101, 102, 103 et 104 sont disposés transversalement respectivement entre les plots 251 et 252, 252 et 253, 253 et 254, 254 et 255. Les plots 251 à 255 permettent la fixation d'un levier 202 à un emplacement transversal approprié, choisi par le passager en fonction de la position des sièges 401 et de ses préférences. Le manche 202 comprend à cet effet un arbre creux à sa base s'emmanchant sur un des plots de fixation 251 à 255. Les plots 251 à 255 peuvent par exemple être filetés ou être adaptés à la réception de goupilles pour la fixation du levier 202. Un disque 242 est fixé sur une extrémité de l'arbre 222. Le disque 242 entraîne le câble d'accélérateur 212 lors de la rotation de l'arbre 222.

Un arbre 223 est disposé à l'avant des longerons 101 à 104. L'arbre 223 comprend des plots de fixation 224, 225 et 226, destinés à recevoir le manche 203. Le manche 203 comprend à cet effet un arbre creux à sa base s'emmanchant sur un des plots de fixation 224 à 226. Les plots de fixation 224, 225 et 226 sont disposés transversalement respectivement entre les longerons 104 et 103,103 et 102, 102 et 101. L'arbre 223 permet d'actionner les tringles 213 par l'intermédiaire d'une biellette 233. Un manche 203 fixé sur l'arbre 223 permet ainsi de contrôler l'inclinaison du rotor 301. L'arbre 223 peut être solidaire d'une platine 243 reliée au châssis 100 par l'intermédiaire d'une rotule 244. La platine 243 est connectée à la biellette 233 de façon à lui appliquer des commandes distinctes lors d'un basculement latéral du manche 203 ou lors d'un basculement axial de ce manche 203.

La figure 4 illustre un exemple de configuration biplace du poste de pilotage. Dans cette configuration, un premier siège 401 est fixé sur les longerons 101 et 102. Un deuxième siège est fixé sur les longerons 103 et 104. Les sièges 401 (illustré en trait discontinu) sont en configuration latérale, disposés de part et d'autre du plan médian (X, Z) de l'autogire 1. Dans cette configuration, l'autogire 1 peut ainsi accueillir deux passagers côte à côte. Dans cette configuration, les poids des deux passagers s'équilibrent pour limiter le pivotement de l'autogire 1 autour de son axe longitudinal (X) du à un déséquilibre de répartition des masses.

Un manche 202 est fixé sur l'arbre 222 par l'intermédiaire du plot 251, à gauche du premier siège 401. Le manche 202 permet ainsi au passager placé à gauche dans le poste de pilotage de contrôler l'accélérateur du moteur 308. Avantageusement, le passager de gauche pourra aussi fixer le manche 202 sur le plot 253, à droite du premier siège 401, par exemple si il est gaucher et préfère disposer de cette commande de ce côté. Deux manches 202 pourront également être fixés sur l'arbre 222, pour permettre aux deux passagers de contrôler l'accélérateur du moteur 308, par exemple pour permettre à un élève et à un instructeur de disposer tous deux de cette commande.

Un manche 203 est fixé sur l'arbre 223 par l'intermédiaire du plot 226. Le manche 203 est placé en vis-à-vis du premier siège 401. Le manche 203 permet ainsi au passager placé à gauche dans le poste de pilotage de contrôler l'inclinaison du rotor 301. Deux manches 203 pourront également être fixés sur l'arbre 223, pour permettre aux deux passagers de contrôler l'inclinaison du rotor 301, par exemple pour permettre à un élève et à un instructeur de disposer tous les deux de cette commande. Un deuxième manche 203 peut ainsi être fixé sur le plot 224 disposé en vis-à-vis du deuxième siège 401. Les deux passagers peuvent placer leurs jambes de part et d'autre d'un manche 203 qui leur fait face afin de contrôler le palonnier 201.

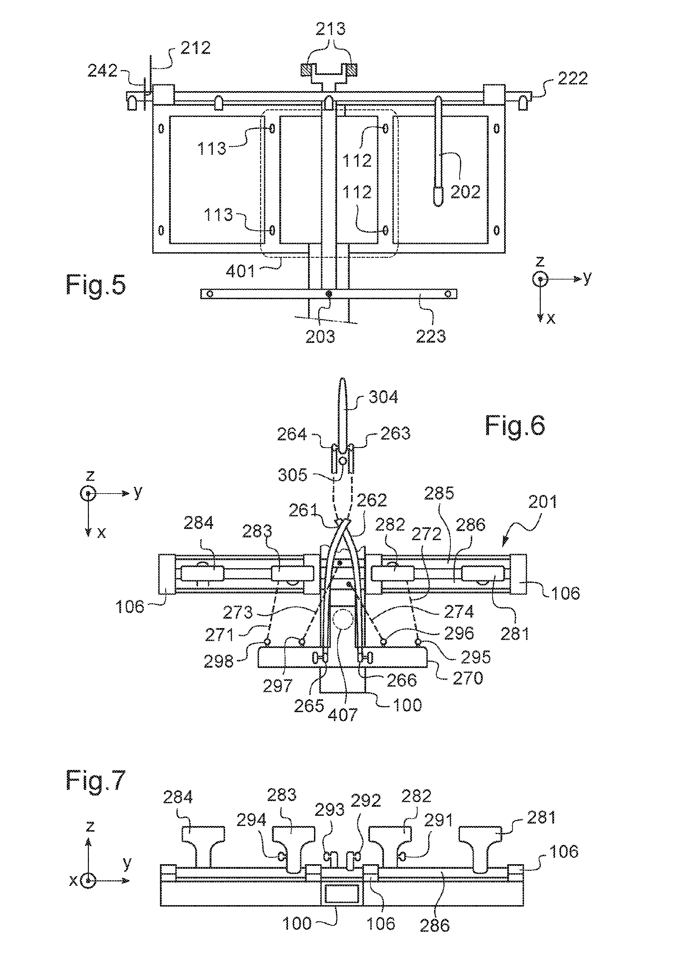

La figure 5 illustre un exemple de configuration monoplace du poste de pilotage. Dans cette configuration, un siège 401 (illustré en trait discontinu) est fixé en position centrale sur les longerons 102 et 103, dans le plan médian (X, Z) de l'autogire 1. Dans cette configuration, le poids du passager est réparti de part et d'autre du plan médian de l'autogire 1. On limite ainsi un pivotement de l'autogire 1 autour de son axe longitudinal (X) du à un déséquilibre de répartition des masses.

Le manche 202 est fixé sur l'arbre 222 par l'intermédiaire du plot 252. Le manche 202 est alors disposé à gauche du siège 401. Le manche 202 peut également être fixé sur l'arbre 222 par l'intermédiaire du plot 253, pour être disposé à droite du siège 401. Le manche 202 ainsi fixé sur l'arbre 222 permet au passager en place centrale de contrôler l'accélérateur du moteur 308.

Un manche 303 est fixé sur l'arbre 223 par l'intermédiaire du plot 225. Le manche 203 est placé en vis-à-vis du siège 401 en position centrale. Le manche 203 permet ainsi au passager en position centrale de contrôler l'inclinaison du rotor 301, et de placer ses jambes de part et d'autre du manche 203 pour contrôler le palonnier 201.

La figure 6 est une représentation schématique de dessus d'une structure de palonnier 201 selon un mode de réalisation de l'invention. La figure 7 est une vue de face des principaux composants de ce palonnier 201. Le palonnier 201 est destiné à contrôler le pivotement de la dérive 304 autour de son axe 305 d'une part, et le pivotement du train avant autour d'un arbre 407. L'arbre 407 est accouplé à une barre 270 et est monté pivotant par rapport au châssis 100. Le palonnier 201 comprend deux tubes 285 et 286 s'étendant transversalement. Les tubes 285 et 286 sont décalés axialement l'un par rapport à l'autre. Les tubes 285 et 286 sont montés pivotants autour d'axes transversaux dans des portées 106 fixées sur le châssis 100. Du côté gauche du plan médian de l'autogire 1, une pédale 281 est fixée en saillie vers le haut sur le tube 286 et une pédale 282 est fixée en saillie vers le haut sur le tube 285. Du côté droit du plan médian de l'autogire 1, une pédale 283 est fixée en saillie vers le haut sur le tube 286 et une pédale 284 est fixée en saillie vers le haut sur le tube 285.

Une came munie d'une rotule 292 à son extrémité est fixée sur le tube 286 du côté gauche de l'arbre 407. Une came munie d'une rotule 293 à son extrémité est fixée sur le tube 285 du côté droit de l'arbre 407. Des rotules 291 et 294 sont fixées latéralement respectivement sur les pédales 282 et 283. Des rotules 295, 296, 297 et 298 sont fixées sur une face arrière de la barre 270. Les rotules 295 et 296 sont disposées du côté gauche de l'arbre 407. Les rotules 297 et 298 sont disposées du côté droit de l'arbre 407. Dans la configuration biplace des sièges 401, des biellettes 272 et 271 (illustrées en traits discontinus) connectent les rotules 291 et 294 respectivement aux rotules 295 et 298. Dans la configuration monoplace du siège 401, des biellettes 274 et 273 connectent les rotules 292 et 293 respectivement aux rotules 296 et 297.

Deux ergots de fixation 265 et 266 sont disposés de part et d'autre de l'axe 407 et sont fixés sur la partie supérieure de la barre 270. Deux ergots de fixation 263 et 264 sont fixés sur des faces opposées de la dérive 304. Les ergots 263 et 264 sont connectés aux ergots 265 et 266 respectivement par des câbles gainés 261 et 262. Les câbles 261 et 262 s'entrecroisent. Les câbles 261 et 262 forment des commandes dédoublées de la dérive 304 pour des raisons de sécurité mais un unique câble pourrait également permettre d'assurer la commande de la dérive 304.

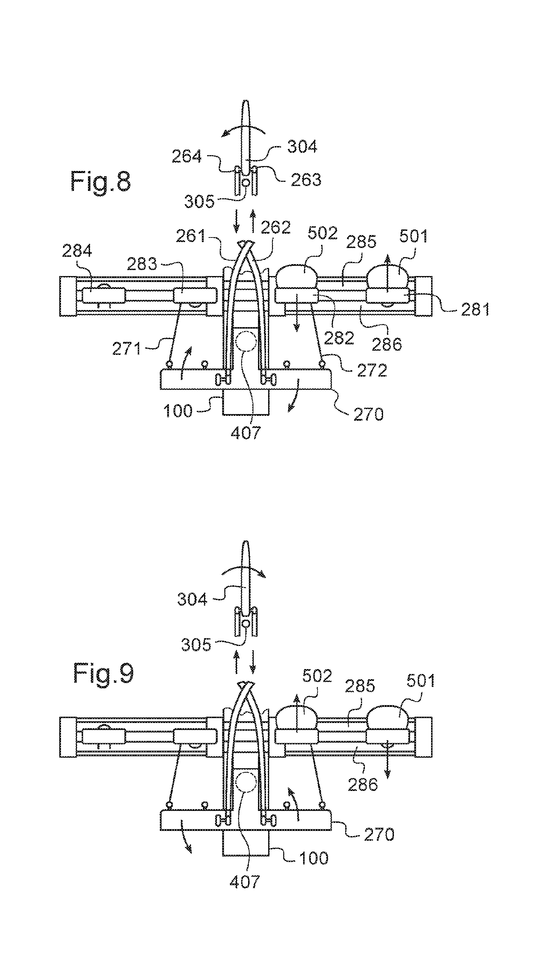

Les figures 8 et 9 illustrent le fonctionnement du palonnier 201 lorsque le poste de pilotage est en configuration biplace. Dans la configuration biplace, les pédales 281 et 282 sont en vis-à-vis du siège de gauche 401. Les pédales 283 et 284 sont en vis-à-vis du siège de droite 401. Ainsi, le palonnier peut être actionné par les deux passagers. Pour conserver un fonctionnement du palonnier 201 conforme aux usages de vol, les biellettes 271 et 272 connectent respectivement les rotules 294, 298 et 291, 295. Les biellettes 271 et 272 sont par exemple emboîtées dans ces rotules par un des passagers avant le début du vol. Les biellettes 273 et 274 sont retirées.

Sur la figure 8, le passager de gauche plaque son pied gauche 501 contre la pédale 281 et son pied droit 502 contre la pédale 282. Par son pied droit 502, le passager enfonce la pédale 282. Par l'intermédiaire de la biellette 272, la pédale 282 fait pivoter la barre 270 comme illustré sur la figure. La roue 405 est alors orientée de façon à diriger l'autogire 1 vers la droite. La barre 270 repousse la pédale 283 vers l'arrière par l'intermédiaire de la biellette 271. La pédale 281, solidaire de la pédale 283 par l'intermédiaire du tube 286, est repoussée vers l'arrière.

Lors du pivotement de la barre 270, une traction est exercée sur le câble 262 et une compression est exercée sur le câble 261. L'ergot 263 est alors repoussé vers l'arrière et l'ergot 264 est tiré vers l'avant. La dérive 304 pivote ainsi autour de son axe 305 pour orienter l'autogire 1 vers la droite.

Sur la figure 9, le passager de gauche plaque son pied gauche 501 contre la pédale 281 et son pied droit 502 contre la pédale 282. Par son pied gauche 501, le passager enfonce la pédale 281. Par l'intermédiaire de la biellette 271, la pédale 283 (solidaire de la pédale 281) fait pivoter la barre 270 comme illustré sur la figure. La roue 405 est alors orientée de façon à diriger l'autogire 1 vers la gauche. La barre 270 repousse la pédale 282 vers l'arrière par l'intermédiaire de la biellette 272.

Lors du pivotement de la barre 270, une traction est exercée sur le câble 261 et une compression est exercée sur le câble 262. L'ergot 264 est alors repoussé vers l'arrière et l'ergot 263 est tiré vers l'avant. La dérive 304 pivote ainsi autour de son axe 305 pour orienter l'autogire 1 vers la gauche.

Pour le passager du siège de droite, une action sur les pédales 283 et 284 produit les mêmes commandes qu'une action sur les pédales 281 et 282 respectivement.

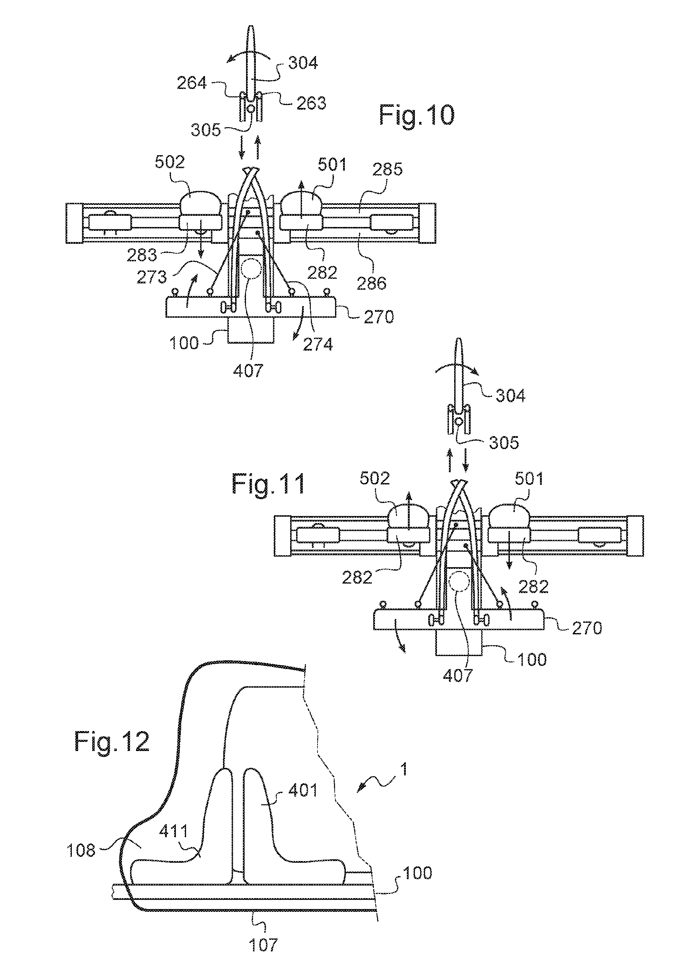

Les figures 10 et 11 illustrent le fonctionnement du palonnier 201 lorsque le poste de pilotage est en configuration monoplace. Dans la configuration monoplace, les pédales 282 et 283 sont en vis-à-vis du siège 401 en position centrale. Ainsi, le palonnier 201 peut être actionné par l'unique passager. Pour conserver un fonctionnement du palonnier 201 conforme aux usages de vol, les biellettes 273 et 274 connectent respectivement les rotules 293, 297 et 292, 296. Les biellettes 273 et 274 sont par exemple emboîtées par un des passagers avant le début du vol. Les biellettes 271 et 272 sont retirées.

Sur la figure 10, le passager en position centrale plaque son pied gauche 501 contre la pédale 282 et son pied droit 502 contre la pédale 283. Par son pied droit 502, le passager enfonce la pédale 283. Par l'intermédiaire de la biellette 274, la pédale 283 fait pivoter la barre 270 comme illustré sur la figure. La roue 405 est alors orientée de façon à diriger l'autogire 1 vers la droite. La barre 270 repousse la pédale 282 vers l'arrière par l'intermédiaire de la biellette 273.

Lors du pivotement de la barre 270, une traction est exercée sur le câble 262 et une compression est exercée sur le câble 261. L'ergot 263 est alors repoussé vers l'arrière et l'ergot 264 est tiré vers l'avant. La dérive 304 pivote ainsi autour de son axe 305 pour orienter l'autogire 1 vers la droite.

Sur la figure 11, le passager en position centrale plaque son pied gauche 501 contre la pédale 282 et son pied droit 502 contre la pédale 283. Par son pied gauche 501, le passager enfonce la pédale 282. Par l'intermédiaire de la biellette 273, la pédale 282 fait pivoter la barre 270 comme illustré sur la figure. La roue 405 est alors orientée de façon à diriger l'autogire 1 vers la gauche. La barre 270 repousse la pédale 283 vers l'arrière par l'intermédiaire de la biellette 274.

Lors du pivotement de la barre 270, une traction est exercée sur le câble 261 et une compression est exercée sur le câble 262. L'ergot 264 est alors repoussé vers l'arrière et l'ergot 263 est tiré vers l'avant. La dérive 304 pivote ainsi autour de son axe 305 pour orienter l'autogire 1 vers la gauche.

La configuration des biellettes 271 à 274 permet ainsi d'utiliser un même palonnier 201 pour les différents passagers dans les différentes configurations du poste de pilotage. Les passagers en position latérale ou le passager en position centrale peuvent diriger l'autogire 1 par des commandes conformes aux usages de vol par un simple changement de la configuration des biellettes 271 à 274. Le changement de configuration des biellettes 271 à 274 permet de façon simple de modifier le contrôle exercé par une pédale du palonnier à la fois sur la roue 405 et sur la dérive 304.

Dans l'exemple, les biellettes 271 et 272 sont identiques aux biellettes 273 à 274. Lors d'un changement de la configuration du poste de pilotage, les biellettes sont déboîtées d'un premier jeu de rotules et emboîtées dans un second jeu de rotules.

Dans le mode de réalisation illustré, le contrôle du pivotement de la dérive 304 et de la roue 405 est obtenu par l'intermédiaire de biellettes actionnées par le palonnier 201. L'homme du métier pourra bien entendu concevoir d'autres systèmes de commande par un palonnier dont la configuration peut être inversée en fonction de la configuration des sièges dans le poste de pilotage.

La position centrale du siège 401 (en configuration monoplace) est avantageusement à cheval sur les positions latérales des sièges 401 (en configuration biplace). Ainsi, l'encombrement transversal du poste de pilotage peut être réduit.

Bien que dans cet exemple on ait décrit des emplacements de sièges prédéfinis transversalement, on peut également envisager d'utiliser des sièges amovibles et coulissants transversalement afin de permettre aux passagers d'ajuster précisément leur position, en particulier lorsque le siège 401 est en position centrale.

La figure 12 est une vue de section de côté d'une variante d'autogire 1 munie d'un cockpit 107 délimitant le poste de pilotage. Un siège 401 est disposé en position centrale, ce qui correspond à la configuration monoplace du poste de pilotage. Le cockpit 107 comprend avantageusement un logement 108 ménagé à l'arrière du siège 401, afin de loger un siège de réserve 411. Un passager pourra ainsi voler seul en configuration monoplace, se poser, installer le siège 401 et le siège de réserve 411 pour passer le poste de pilotage en configuration biplace, puis ensuite embarquer un autre passager dans cette configuration.

Bien que le mode de réalisation illustré soit mis en oeuvre pour un autogire 1, l'invention est bien entendu également applicable à tout autre type d'aéronef motorisé léger.

## Revendications

1. Aéronef motorisé léger (1), comportant:
- une dérive pivotante (304) ;
- un poste de pilotage apte à recevoir des premier et deuxième sièges (401) disposés côte à côte de part et d'autre du plan médian de l'aéronef ;
- un palonnier de commande (201) du pivotement de la dérive (304), le palonnier comportant des première, deuxième, troisième et quatrième pédales (281,282,283,284), les première et troisième pédales induisant une commande sur la dérive opposée à la commande des deuxième et quatrième pédales, les première et deuxième pédales étant en vis-à-vis du premier siège et les troisième et quatrième pédales étant en vis-à-vis du deuxième siège ; **caractérisé en ce que** :
- le poste de pilotage est apte à recevoir un unique siège disposé au niveau du plan médian de l'aéronef en remplacement des premier et deuxième sièges et disposé en vis-à-vis des deuxième et troisième pédales ,
- l'aéronef comporte un dispositif permettant d'inverser sélectivement les commandes appliquées sur la dérive (304) par les deuxième et troisième pédales.

2. Aéronef motorisé léger (1) selon la revendication 1, comprenant une roue (405) montée pivotante autour d'un axe vertical au niveau d'une extrémité avant de l'aéronef, le palonnier de commande (201) entraînant la roue en pivotement autour de cet axe vertical (407), les première et troisième pédales (281, 283) induisant une commande de pivotement de la roue opposée à la commande des deuxième et quatrième pédales (282, 284), l'aéronef comportant également un dispositif permettant d'inverser les commandes de pivotement appliquées sur la roue par les deuxième et troisième pédales.

3. Aéronef motorisé léger (1) selon la revendication 1 ou 2, dans lequel le palonnier (201) comprend des premier et deuxième arbres (286,285) montés pivotants transversalement dans le poste de pilotage, les première et troisième pédales (281,283) étant fixées radialement en saillie sur le premier arbre (286) et les deuxième et quatrième pédales (282,284) étant fixées radialement en saillie sur le deuxième arbre (285), le palonnier comportant une barre de direction (270) montée pivotante autour d'un axe vertical (407) et entraînant le pivotement de la dérive (304), la barre de direction comportant des première et deuxième branches s'étendant latéralement de part et d'autre de l'axe vertical, les premier et deuxième arbres (286, 285) pouvant chacun être accouplés sélectivement à chacune des branches latérales de la barre de direction.

4. Aéronef motorisé léger (1) selon la revendication 3, dans lequel le dispositif d'inversion des commandes comprend :
- deux rotules (295,296) fixées sur la première branche latérale de la barre de direction (270) ;
- deux rotules (297,298) fixées sur la deuxième branche latérale de la barre de direction ;
- deux rotules (292,294) solidaires du premier arbre (286) ;
- deux rotules (291,293) solidaires du deuxième arbre (285) ;
- des biellettes (271,272,273,274) présentant des extrémités pouvant être emboîtées de façon démontable sur lesdites rotules, de façon à accoupler sélectivement le premier arbre (286) à la première ou à la deuxième branche latérale de la barre de direction, et de façon à accoupler sélectivement le deuxième arbre (285) à la première ou à la deuxième branche latérale de la barre de direction.

5. Aéronef motorisé léger (1) selon la revendication 3 ou 4, comprenant un premier câble (262) fixé sur la première branche latérale de la barre de direction (270), un deuxième câble (261) fixé sur la deuxième branche latérale de la barre de direction, les câbles (261,262) entraînant la dérive (304) en pivotement lorsqu'ils sont entraînés par la barre de direction.

6. Aéronef motorisé léger selon l'une quelconque des revendications précédentes, comprenant un cockpit (107) délimitant le poste de pilotage, un logement (108) étant ménagé dans le cockpit à l'arrière du siège en position centrale de façon à loger un siège additionnel (411).

7. Aéronef motorisé léger selon l'une quelconque des revendications précédentes, comprenant une commande de l'angle de tangage de cet aéronef, la commande de l'angle de tangage comportant un arbre (223) s'étendant transversalement à l'avant des emplacements des premier et deuxième sièges et comportant au moins un manche (203), l'arbre et le manche étant configurés (224,225,226) pour permettre la fixation du manche à l'arbre sélectivement en vis-à-vis des emplacements du premier siège, du deuxième siège ou du siège unique.

8. Aéronef motorisé léger selon l'une quelconque des revendications précédentes, comportant un moteur à combustion interne et une commande d'accélérateur du moteur à combustion interne, la commande d'accélérateur comportant un arbre (222) s'étendant transversalement dans le poste de pilotage et comportant au moins un manche (202), l'arbre et le manche étant configurés (251,252,253,254,255) pour la fixation du manche à l'arbre de façon à rendre sélectivement le manche accessible latéralement depuis le premier siège, depuis le deuxième siège ou depuis le siège unique.

9. Aéronef motorisé léger selon l'une quelconque des revendications précédentes, dans lequel l'unique siège en position centrale est disposé à cheval sur les emplacements des premier et deuxième sièges.

10. aéronef motorisé léger selon l'une quelconque des revendications précédentes, **caractérisé en ce que** cet aéronef est un autogire.
